# EUROPÄISCHE PATENTSCHRIFT

(11) **EP 1 219 003 B1**
(45) Veröffentlichungstag und Bekanntmachung des Hinweises auf die Patenterteilung: **20.04.2005**
(21) Anmeldenummer: 98967144.1
(22) Anmeldetag: 27.11.1998
(51) Int. Cl.: H02J 7/34

(54) **VORRICHTUNG ZUR ENERGIEVERSORGUNG EINES KRAFTFAHRZEUGS**
DEVICE FOR SUPPLYING ELECTRICITY TO A MOTOR VEHICLE
DISPOSITIF POUR L'ALIMENTATION EN ENERGIE D'UN VEHICULE AUTOMOBILE

(30) Priorität: 11.12.1997 DE 19754964
(43) Veröffentlichungstag der Anmeldung: 03.07.2002
(73) Patentinhaber: Bayerische Motoren Werke Aktiengesellschaft, 80809 München (DE)
(72) Erfinder: Reimer, Stefan, 84048 Puttenhausen (DE); Gerbig, Falk, 85391 Allerhausen (DE); Bachmann, Peter, 85521 Ottobrunn (DE); Weisser, Matthias, 82024 Taufkirchen (DE); Werner, Jürgen, 85748 Garching (DE); Zeit, Stefan, 80995 München (DE)
(74) Vertreter: Wesel-Mair, Julia
(86) Internationale Anmeldenummer: PCT/EP1998/007687
(87) Internationale Veröffentlichungsnummer: WO 1999/030403

(56) Entgegenhaltungen:
- EP-A- 0 376 667
- DE-A- 4 340 350
- DE-A- 19 522 563

## Beschreibung

Die Erfindung betrifft eine Vorrichtung zur Energieversorgung eines Kraftfahrzeuges nach dem Oberbegriff des Patentanspruchs 1.

Eine derartige Vorrichtung ist beispielsweise aus der DE 43 40 350 C2 bekannt. Diese bekannte Vorrichtung weist eine aufladbare Batterie, einen der Batterie parallel schaltbaren Kondensator und eine zwischen Batterie und Kondensator angeordnete Schaltungsanordnung in Form einer Logikschaltung auf. Die Logikschaltung definiert bei Betätigung des Anlassers im Kraftfahrzeug ein Zeitfenster und führt mindestens eine Spannungsabfrage durch. Abhängig vom Ergebnis dieser Spannungsabfrage schaltet die Logikschaltung den Kondensator parallel zur Batterie. Vorzugsweise wird der Kondensator nur dann parallelgeschaltet, wenn die Spannung der Batterie innerhalb des Zeitfensters unter einen vorbestimmten Wert absinkt. Mittels dieser bekannten Schaltungsanordnung soll über den der Batterie parallelgeschalteten Kondensator das Starten eines Fahrzeugs auch dann noch sichergestellt werden, wenn die Batterie nahezu entladen ist. Durch die Parallelschaltung des Kondensators mit der Batterie ist jedoch nur eine maximale Kondensatorspannung erreichbar, deren Wert den Wert der Batteriespannung nicht übersteigen kann. Diese bekannte Schaltungsanordnung ist daher nicht geeignet, mittels des Kondensators kurzzeitig hohen Energieüberschuß zu speichern und damit eine entladene Batterie wirksam wieder aufzuladen.

Weiterhin ist aus der DE 195 22 563 A1 eine Schaltungsanordnung zur Energieversorgung eines Kraftfahrzeuges bekannt, bei der die in einem Kondensator gespeicherte Energie, insbesondere die bei einem rekuperativen Bremsen erzeugte Elektroenergie, geregelt an eine aufladbare Batterie abgegeben wird. Diese bekannte Schaltungsanordnung offenbart jedoch keine Details über die Art der Regelung sowie über das Verhältnis der maximal möglichen Kondensatorspannung zur Batteriespannung.

Zum technischen Umfeld der Erfindung wird darüber hinaus auf die EP 0 568 655 B1 hingewiesen, aus der eine Vorrichtung zur Energieversorgung eines Kraftfahrzeugs mit zwei aufladbaren Batterien unterschiedlicher Nennspannungen und mit einer zwischen den Batterien angeordneten Schaltungsanordnung in Form eines Spannungswandlers bekannt ist.

Es ist Aufgabe der Erfindung, eine Vorrichtung zur Energieversorgung eines Kraftfahrzeugs eingangs genannter Art derart zu verbessern, daß einerseits kurzfristig zur Verfügung stehender Energieüberschuß wirksam zum Aufladen einer Kraftfahrzeugbatterie genutzt wird und gleichzeitig die Lebensdauer der wiederaufladbaren Kraftfahrzeugbatterie erhöht wird.

Diese Aufgabe wird durch die kennzeichnenden Merkmale des Patentanspruchs 1 gelöst. Eine vorteilhafte Weiterbildung der Erfindung ist der Gegenstand des Patentanspruchs 2.

Erfindungswesentlich ist die Verwendung eines Kondensators (z. B. Power Cap oder Super Cap), dessen Nennspannung und damit dessen maximal mögliche Spannung vorzugsweise um ein Vielfaches größer als die Nennspannung der Batterie ist. Durch die Verwendung eines derartigen Puffer-Kondensators als Energiespeicher mit großem Spannungsvariationsbereich ist die Spannung am Kondensator über die Batteriespannung hinaus wesentlich erhöhbar um bei kurzzeitigem Energieüberschuß, wie z. B. durch rekuperatives Bremsen, diesen Energieüberschuß bestmöglich speichern zu können. Die Batterie wird mittels dieses Kondensators über einen Spannungswandler, vorzugsweise einen DC/DC-Wandier, gesteuert aufgeladen.

In einer besonders vorteilhaften Weiterbildung der Erfindung wird die Aufladung der Batterie mittels des Kondensators über den Spannungswandler derart gesteuert, daß der aufgeladene Kondensator maximal bis zum Erreichen einer Kondensatorspannung entladen wird, die in etwa gleich der momentanen Ist-Spannung der Batterie ist. Durch diese vorteilhafte Weiterbildung kann eine Schaltungsanordnung als Spannungswandler verwendet werden, der lediglich eine "Abwärts"-Wandlung im Sinne einer Spannungreduzierung ausgehend von der Kondensatorspannung durchzuführen hat. Dadurch kann der Spannungswandler zwischen der Batterie und dem Kondensator besonders einfach und kostengünstig aufgebaut werden.

Die Erfindung umfaßt auch einen erweiterterten Spannungswandler in der Weise, daß in umgekehrter Richtung der Kondensator über die Batterie auf eine Spannung aufladbar ist, deren Wert größer als der Wert der Batteriespannung ist.

Vorzugsweise wird die erfindungsgemäße Schaltungsanordnung bei Kraftfahrzeugen mit einer aufladbaren Batterie verwendet, die eine höhere als die übliche Nennspannung aufweist (z. B. 36 V statt 12 V), um auch die Versorgung von Hochleistungsverbrauchern, deren Anzahl in den Kraftfahrzeugen ständig zunimmt, sicherzustellen.

Durch die erfindungsgemäße Vorrichtung zur Energieversorgung wird zum einen kurzfristig zur Verfügung stehender Energieüberschuß wirksam genutzt und zum anderen ein variables Mehrspannungsbordnetz ermöglicht.

In der Zeichnung ist ein Ausführungsbeispiel der Erfindung dargestellt. Es zeigen
- Fig. 1: eine erfindungsgemäße Schaltungsanordnung und
- Fig. 2: ein möglicher Verlauf der Kondensatorspannung nach der erfindungsgemäßen Steuerung zur Aufladung der Batterie.

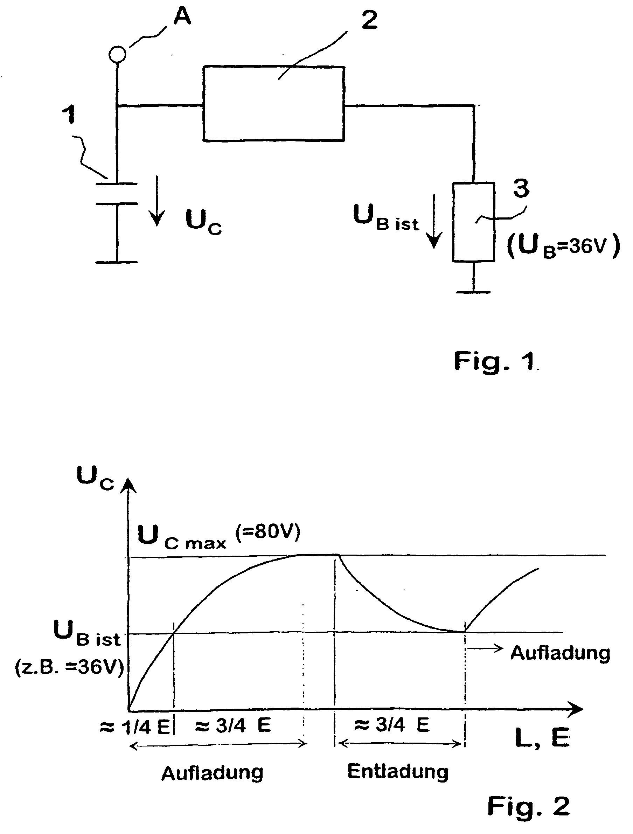

In Fig. 1 ist ein Kondensator 1 über einen Spannungswandler 2, der vorzugsweise ein DC/DC-Wandler ist, mit einer Kraftfahrzeug-Batterie 3 verbunden. Als Kondensator 1 wird vorzugsweise ein Puffer-Kondensator (Power-Cap) mit einer Nennspannung bzw. maximal möglichen Spannung U_{C max} von beispielsweise 80 V verwendet. Die Batterie 3 ist beispielsweise eine übliche Kraftfahrzeug-Batterie mit einer Nennspannung U_{B} von beispielsweise 36 V. Somit ist die Nennspannung des Kondensators 1 in etwa um den Faktor 2 größer als die Nennspannung der Batterie.

Über einen elektrischen Anschluß A, der beispielsweise mit einem Generator zur Bremsenergierückspeisung verbunden ist, ist der Kondensator 1 aufladbar. Die Kondensatorspannung U_{C} ist direkt proportional zum Ladezustand des Kondensators 1. Das Verhältnis des Ladezustands bzw. der geladenen Energiemenge E zur Kondensatorspannung U_{C} ergibt sich durch folgende Formel: E = ½ • C • U_{C}²; bei doppelter Spannung U_{C} ist somit die vierfache Energiemenge E speicherbar.

Ergänzend wird darauf hingewiesen, daß die Lebensdauer eines derartigen Kondensators durch seine Zyklen- und Hochstrom-Festigkeit eine wesentlich längere Lebensdauer als eine übliche Kraftfahrzeug-Batterie aufweist.

Ist der Kondensator 1 zumindest in der Weise aufgeladen, daß die Kondensatorspannung U_{C} größer als die Ist-Spannung U_{B ist} der Batterie 3 ist, steuert der Spannungswandler 2 die Aufladung der Batterie 3 durch den Kondensator 1 entsprechend dem Bedarf der Batterie 3 und/oder dem mit der Batterie 3 ggf. verbundenen Bordnetz (hier nicht dargestellt).

In Fig. 2 wird die Art und Weise der Steuerung des Spannungswandlers 2 näher dargestellt. In Fig. 2 ist auf der X-Achse der Ladezustand L bzw. die gespeicherte Energiemenge E und auf der Y-Achse die zugehörige Kondensatorspannung U_{C} dargestellt. Erfindungsgemäß wird beispielsweise ausgehend von einem vollständig geladenen Kondensator 1 (U_{C} = U_{C max}) die Aufladung der Batterie 3 durch Entladung des Kondensators 1 maximal solange durchgeführt, bis die Kondensatorspannung U_{C} in etwa den Wert der Ist-Spannung U_{B ist} der Batteriespannung 3 erreicht hat. Hierdurch muß der Spannungswandler 2 lediglich eine Spannungs-Abwärts-Wandlung durchführen. Würde der Kondensator 1 noch weiter entladen werden, würde der Spannungswandler 2 ab Unterschreiten der Kondensatorspannung U_{C} = U_{B ist} eine Spannungs-Aufwärtswandlung im Sinne einer Spannungserhöhung durchführen müssen. Dies ist zwar technisch realisierbar, bezogen auf einen möglichst hohen Wirkungsgrad jedoch uneffizient.

Hat, wie im dargestellten Beispiel nach Fig. 2, eine Entladung des Kondensators 1 ausgehend von einer Spannung U_{C} = 80 V in der Weise stattgefunden, daß die Kondensatorspannung U_{C} den Wert der Ist-Spannung U_{B ist} = 36 V (hier gleich der Nennspannung U_{B}=36 V) der Batterie 3 erreicht hat, wurde durch die genannten Zusammenhänge zwischen Ladezustand L bzw. Energiemenge E und Kondensatorspannung U_{C} bei einer Abnahme der Kondensatorspannung U_{C} um hier etwa die Hälfte bereits ¾ der im Kondensator gespeicherten Energiemenge E an die Batterie 3 abgegeben.

Durch diese erfindungsgemäße Steuerung der Aufladung der Batterie wird ein optimaler Kompromiß zwischen dem schaltungstechnischen Aufwand des Spannungswandlers 2 und einer möglichst effizienten Nutzung des im Kondensator 1 kurzfristig geladenen Energieüberschusses erreicht.

## Patentansprüche

1. Vorrichtung zur Energieversorgung eines Kraftfahrzeugs mit einer aufladbaren Batterie, einem Kondensator und einer zwischen Batterie und Kondensator angeordneten Schaltungsanordnung, **dadurch gekennzeichnet, daß** die Schaltungsanordnung ein Spannungswandler (2) ist, daß die Nennspannung (U_{C max}) des Kondensators (1) größer als die Nennspannung (U_{B}) der Batterie (3) ist, daß die Batterie (3) mittels des Kondensators (1) aufladbar ist und daß die Aufladung der Batterie (3) mittels des Kondensators (1) über den Spannungswandler (2) gesteuert wird.

2. Vorrichtung nach Patentanspruch 1, **dadurch gekennzeichnet, daß** die Aufladung der Batterie (3) mittels des Kondensators (1) über den Spannungswandler (2) derart gesteuert wird, daß der Kondensator (1) maximal bis zum Erreichen eines Wertes der Kondensatorspannung (U_{C}) entladen wird, der gleich dem Wert der Ist-Spannung (U_{B ist}) der Batterie (3) ist.

## Claims

1. A device for supplying energy to a motor vehicle comprising a chargeable battery, a capacitor and a circuit arrangement arranged between the battery and capacitor, **characterised in that** the circuit arrangement is a voltage transformer (2), **in that** the nominal voltage (U_{C max}) of the capacitor (1) is greater than the nominal voltage (U_{B}) of the battery (3), **in that** the battery (3) can be charged by means of the capacitor (1) and **in that** the charging of the battery (3) is controlled by means of the capacitor (1) via the voltage transformer (2).

2. A device according to claim 1, **characterised in that** the charging of the battery (3) is controlled by means of the capacitor (1) via the voltage transformer (2) in such a way that the capacitor (1) is maximally discharged until a value of the capacitor voltage (U_{C}) is reached which equals the value of the actual voltage (U_{B actual}) of the battery (3).

## Revendications

1. Dispositif pour l'alimentation en énergie d'un véhicule automobile comportant une batterie rechargeable, un condensateur et une disposition de circuit disposée entre batterie et condensateur,
**caractérisé en ce que**
la disposition de circuit est un convertisseur de tension (2), que la tension nominale (U_{C max}) du condensateur (1) est supérieure à la tension nominale (U_{B}) de la batterie (3), que la batterie (3) est rechargeable au moyen du condensateur (1) et que la charge de la batterie (3) est commandée au moyen du condensateur (1) via le convertisseur de tension (2).

2. Dispositif selon la revendication 2,
**caractérisé en ce que**
la charge de la batterie (3) au moyen du condensateur (1) via le convertisseur de tension (2) est commandée de manière telle que le condensateur (1) est déchargé au maximum jusqu'à atteindre une valeur de la tension de condensateur (U_{C}) qui est égale à la tension réelle (U_{B réel}) de la batterie (3).
